# FASCICULE DE BREVET EUROPEEN

(11) **EP 2 027 915 B1**
(45) Date de publication et mention de la délivrance du brevet: **12.12.2012**
(21) Numéro de dépôt: 07447048.5
(22) Date de dépôt: 03.08.2007
(51) Int. Cl.: B01J 19/08, B82B 3/00

(54) **Installation intégrée pour la production de nanoparticules dans des conditions de risque maîtrisé**
Integrierte Anlage zur Produktion von Nanopartikeln unter Bedingungen mit kontrolliertem Risiko
Integrated installation for producing nanoparticles with controlled risk conditions

(43) Date de publication de la demande: 25.02.2009
(73) Titulaire: Nanopole S.A., 4102 Seraing (BE)
(72) Inventeur: Vandecasserie, Christian, 1380 Lasnes (BE); Salmon, Jean, 4000 Liège (BE)
(74) Mandataire: pronovem

(56) Documents cités:
- EP-A- 1 375 424
- DE-A1- 3 925 941
- US-A1- 2002 068 524
- US-A1- 2006 269 468
- M. M. LEPAROUX: "l'état des connaissances sur les risques liés à la manipulation de nanomatériaux"[Online] 13 janvier 2006 (2006-01-13), XP002462208 Extrait de l'Internet: URL:http://www.dr5.cnrs.fr/IMG/pdf/Resume_ M._LEPAROUX.pdf> [extrait le 2007-12-13]

## Description

### Objet de l'invention

L'objet de la présente invention est de proposer une installation permettant de combiner une unité complète de production de nanoparticules, en ce compris toutes les étapes depuis l'alimentation en composés minéraux jusqu'à l'emballage, la manutention et la livraison, avec un système complet de confinement des particules nanométriques produites.

L'invention a donc pour objet la conception et la réalisation d'une installation de production qui consistera en un équipement intégré, lequel permettra au client d'entrer en production dans des délais brefs tout en respectant les règles en vigueur de protection des personnes, des installations et de l'environnement.

### Arrière-plan technologique et état de la technique

Les nanomatériaux, et en particuliers les nanopoudres, font l'objet actuellement d'un intérêt considérable dans de nombreux domaines d'application comme l'automobile, l'aéronautique, l'électronique, etc., en raison de propriétés nouvelles par rapport au matériau massif de même composition chimique (température de fusion plus basse, activité catalytique plus importante, nouvelles propriétés physiques et caractéristiques mécaniques, etc.).

On connaît différentes technologies de fabrication de ces nanomatériaux, à savoir les procédés physiques (effet joule, induction haute fréquence, arc plasma, etc.), les procédés chimiques (sol-gel, synthèse plasma) et la mécanosynthèse.

Parmi ces procédés, la synthèse par plasma à couplage inductif (ICP) présente un certain nombre d'avantages : haute température (8000 à 11000K, ce qui permet de vaporiser tous les métaux et céramiques, vitesse modérée d'écoulement des gaz, augmentation de la densité, utilisation possible de précurseurs solides, contrôle de la taille des nanoparticules produites par la trempe, possibilité de synthèse de nombreux types de nanoparticules minérales pures, etc.). Le principe consiste à évaporer des précurseurs en utilisant l'énergie du plasma puis à tremper la phase gazeuse obtenue de manière contrôlée pour la recondenser sous la forme de nanoparticules. De nombreux équipements à technologie de plasma inductif ont été brevetés, notamment par Tekna Plasma Systems Inc. et l'Université de Sherbrooke, Québec, Canada (WO-A-2006/79213, US-A-2005/0211018, CN-A-1559662, CA-A-2556786, RU-C-2252817, US-A-2002/0155059, US-B-6919527, WO-A-03032693, WO-A-9533362, CA-A-2085133, US-A-4853250, WO-A-2006/096964, US-B-6998103, US-A-2005/0163696, etc.) et certains de ceux-ci sont disponibles commercialement.

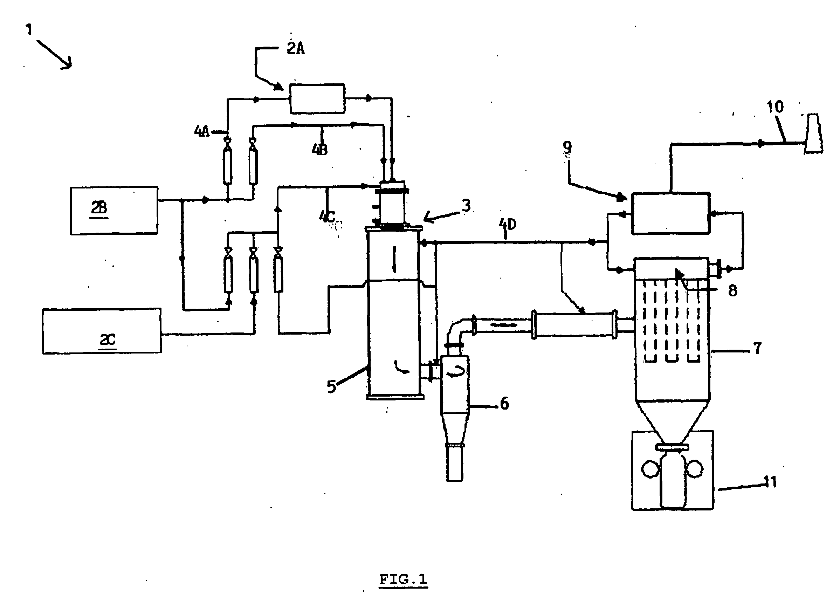

La méthode de plasma inductif est décrite schématiquement sur la figure 1. Pour simplifier l'exposé, on décrira un appareillage de production de nanopoudres par plasma inductif. L'état de la technique cité ci-dessus montre cependant que cette technologie s'applique également à la fabrication de nanotubes et éventuellement d'autres types encore de particules submicrométriques.

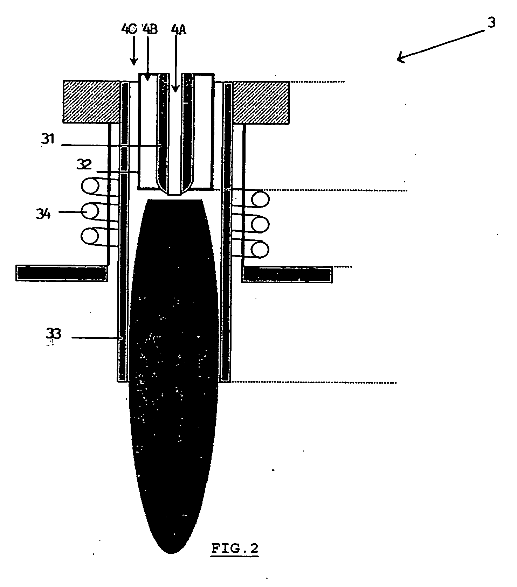

Une installation de production de nanoparticules 1 selon cette technologie comprend typiquement les éléments suivants :
- une alimentation en matières premières et réactifs, à savoir sous forme solide (poudre micrométrique 2A), gazeuse (ex. argon 2B, hydrogène 2C) ou liquide (solutions, suspensions) ;
- une torche plasma 3, alimentée par un générateur électrique haute fréquence (non représenté), connu en soi de l'homme de métier (par exemple 5MHz, 60kW), et par différents gaz (voir détails sur la figure 2) :
   4A : injection d'un gaz porteur (voir ci-dessus) ;
   4B : injection d'un gaz central (ex. argon et/ou hélium) ;
   4C : injection d'un gaz de gainage ou de confinement (ex. argon, hydrogène, azote et/ou hélium) ;
- un réacteur 5, c'est-à-dire une chambre à vide pour la synthèse des matériaux par condensation/solidification, grâce à l'injection d'un gaz de trempe 4D («quench») et en option d'un gaz de fonctionnalisation (passivation, enrobage, etc.) ;
- un cyclone de séparation 6 permettant une première séparation des poudres en fonction de leur taille (micro-et nanoparticules) ;
- une unité de filtration 7, continue ou discontinue, par cartouche de tamis métallique ou membrane synthétique avec contre-flux de gaz « blowback » 8 émis de façon continue ou intermittente ;
- une unité de pompage à vide et recyclage du gaz de trempe 9, optionnelle en fonction de la corrosivité potentielle des gaz ;
- un échappement à l'atmosphère 10 ;
- une unité de collecte et d'emballage 11 par porte de type α/β ou en boîte à gants sous forme sèche ou en suspension.

Plus particulièrement, la figure 2 détaille schématiquement la torche plasma à induction 3 de la figure 1. La torche 3 comprend un injecteur central 31 alimenté en gaz porteur 4A et entouré d'un tube de quartz ou de céramique 32, qui permet de séparer le gaz central du gaz de gainage. Un deuxième tube de quartz ou céramique 33 fait office de cage froide (et de tube de confinement), autour de laquelle sont disposées les spires de l'inducteur 34. Le gaz central 4B est injecté dans le tube de quartz 32 tandis que le gaz de gainage 4C est injecté à la périphérie de la cage froide 33.

Le développement industriel lié à la production de nanopoudres a été freiné initialement par le fait que les méthodes de manipulation et de traitement selon l'état de l'art ne sont pas toujours bien adaptées aux nanopoudres et également pour des raisons de santé/sécurité des opérateurs et de protection de l'environnement.

Vu que des méthodologies d'évaluation des risques liés à la production et à l'utilisation de nanoparticules sont encore en stade de développement (ex. projet européen NANOSAFE2), il est généralement admis que le principe de précaution doit s'appliquer en l'espèce. Ainsi, la conception et la réalisation d'appareils et d'installations à mettre en service ne pourra tolérer aucune possibilité d'émission de nanoparticules dans l'environnement, que ce soit par voie liquide ou gazeuse, ni aucun contact des opérateurs avec les nanoparticules produites.

M. Leparoux et al., dans Production de *nanopoudres par procédé plasma - maîtrise des risques d'exposition,* EMPA-DACS, Thoune (Suisse), ont investigué les mesures à prendre à chaque étape du procédé de synthèse des nanopoudres par plasma, sur une installation prototype du genre décrit ci-dessus, en vue de réduire le risque d'exposition du personnel et d'émission de nanoparticules dans l'environnement.

En particulier, les mesures suivantes ont été proposées :
- collecte des nanopoudres produites dans des récipients hermétiques équipés d'un système de double-vanne ;
- transfert des collecteurs dans une boîte à gants sous atmosphère contrôlée d'argon, équipée d'un sas, d'un double filtre HEPA en sortie et d'une soupape à bain d'huile ;
- transvasement à l'intérieur de la boîte à gants dans des récipients hermétiques ;
- avant ouverture du réacteur, mise en communication de la chambre avec un système de filtration extérieure comprenant des ventilateurs (aspiration) pour la mise du réacteur en dépression et le nettoyage des parois du réacteur ;
- dimensionnement du système de ventilation pour placer l'ensemble du laboratoire en légère dépression permettant un renouvellement permanent de l'air ;
- équipement adéquat du personnel : gants en latex, masque, lunettes (intervention ordinaire) ou combinaison intégrale munie d'une unité respiratoire accrochée à la ceinture (opération de nettoyage).

De manière plus générale, on connaît, dans le domaine de la ventilation de laboratoires où sont stockés ou manipulés des produits chimiques ou biologiques (potentiellement) dangereux comme par exemple, des agents biologiques pathogènes, des OGM, des radio-isotopes, etc., des équipements pouvant maintenir le laboratoire en légère dépression (de l'ordre de 10 à 20 pascal avec un taux de renouvellement par heure compris entre 5 et 10) et assurer une « barrière de pression » s'opposant à la diffusion des polluants vers l'extérieur (niveau de confinement L3 ou L4 correspondant aux risques biologiques fort et majeur respectivement, voir Directive européenne 98/81/CE). La dépression doit cependant être suffisamment faible pour permettre l'ouverture de la porte du laboratoire.

### Buts de l'invention

La présente invention vise à fournir une solution qui permette de s'affranchir des inconvénients de l'état de la technique.

Plus précisément l'invention a pour but de proposer une installation intégrée comprenant une unité complète de production de nanoparticules, en ce compris toutes les étapes depuis l'alimentation en composés minéraux jusqu'à l'emballage, la manutention et la livraison, couplée à un dispositif de confinement intégral des particules nanométriques produites.

### Principaux éléments caractéristiques de l'invention

Un premier objet de la présente invention se rapporte à une installation intégrée pour la production et le traitement de nanoparticules, de préférence sous la forme de nanopoudres d'oxydes, de céramiques, métalliques, etc., de nanotubes de carbone, d'argiles exfoliées, etc., dans des conditions de risque maîtrisé pour des opérateurs et pour l'environnement. Selon les termes de la revendication 1, cette installation comprend des moyens fermés de fabrication, de filtration et de collecte desdites nanoparticules, dans une zone confinée et en dépression au moins partielle par rapport à l'environnement extérieur à ladite zone. La zone confinée comprend une pluralité de locaux. Les différents locaux constitutifs de ladite zone confinée sont respectivement soumis à une série de dépressions en cascade, par rapport à une pression de référence, en fonction du degré de protection nécessaire pour les opérateurs et l'environnement.

Des modalités d'exécution préférées de l'invention sont décrites dans les revendications 2 à 11.

Un second objet de la présente invention concerne, selon les termes de la revendication 12, un procédé de production et de traitement de nanoparticules, de préférence sous la forme de nanopoudres ou nanotubes, dans des conditions de risque maîtrisé pour des opérateurs et pour l'environnement, utilisant une installation selon l'une quelconque des revendications 1 à 11, caractérisé en ce qu'il comporte au moins les mesures de protection suivantes des opérateurs et/ou de l'environnement :
- l'accès d'un opérateur à la zone confinée est assuré, sur base de moyens d'autorisation, en passant par un sas d'entrée comprenant un premier local d'isolation en surpression par rapport à l'environnement extérieur, où l'opérateur prend un survêtement propre et un second local dit local-barrière, en dépression par rapport à l'environnement extérieur et éventuellement par rapport à un local principal de la zone confinée, où l'opérateur revêt ce survêtement ;
- l'alimentation en poudre comme matière première d'une unité fermée de production en dépression par rapport au local principal de la zone confinée est effectuée par un système automatique étanche utilisant un manchon ou système de double-porte α/β à usage multiple ;
- avant emballage et manutention, la collecte des nanoparticules produites dans l'unité de production est effectuée au moyen de récipients souples ou rigides via un ou plusieurs systèmes de double-porte α/β ;
- les nanoparticules produites sont transférées de l'unité fermée de production à une zone de laverie et décontamination en dépression par rapport au local principal, par un sas de transfert à double accès qui peut être le local principal ;
- des outils amovibles appartenant à l'unité de production sont, après chaque campagne, démontés et emballés hermétiquement dans des sacs en plastique ou, le cas échéant, obturés hermétiquement par des dispositifs temporaires de fermeture tels que bouchons ou flasques, l'équipement de production étant mis temporairement en dépression pendant le démontage, afin de maintenir confinés les contaminants ;
- les outils amovibles préparés et sécurisés comme indiqué ci-dessus sont transférés de l'unité de production à la zone de laverie et décontamination par le sas de transfert ;
- des gaz utilisés dans le procédé de production sont traités dans des locaux techniques adjacents, isolés et maintenus en dépression par rapport à l'environnement et au local principal de la zone de confinement ;
- des activités de contrôle de qualité sont effectuées dans un laboratoire séparé, en dépression par rapport à l'environnement et équipé, en vue de la manipulation d'échantillons de production pour analyse, de moyens protecteurs de collecte des poudres (nanoparticules) résiduelles éventuellement en suspension dans l'air, telles que hottes d'aspiration ou tables aspirantes, et de moyens à systèmes de portes α/β pour la collecte des échantillons prélevés aux différentes étapes de production ;
- les locaux confinés sont ventilés par un groupe de pulsion/extraction où l'air transite par des filtres absolus avant rejet à l'atmosphère ;
- les gaz du procédé de production chargés en nanoparticules sont lavés avant rejet à l'atmosphère ;
- les liquides du procédé de production et de lavage sont collectés dans une ou plusieurs cuves de décantation et sont traités.

### Brève description des figures

La figure 1, déjà mentionnée, représente le schéma de principe d'une installation de production de nanopoudres selon la méthode de plasma inductif.

La figure 2, déjà mentionnée, représente le schéma de principe d'une torche plasma fonctionnant selon la méthode de plasma inductif.

La figure 3 représente le schéma de principe d'une zone intégrée de confinement selon la présente invention.

### Description d'une forme d'exécution préférée de l'invention Confinement

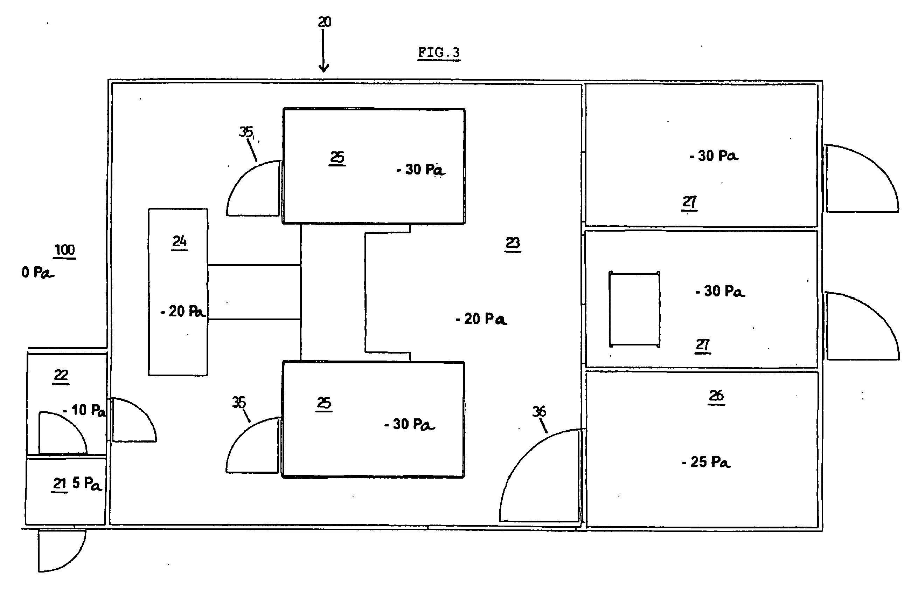

L'entièreté de l'équipement intégré selon l'invention est placée dans une zone fermée et étanche 20, subdivisée en locaux internes, représentée sur la figure 3, dont l'accès par les opérateurs à partir de l'extérieur se fait au travers d'un sas. De même, le passage entre les locaux internes se fera, selon les nécessités de confinement, au travers de sas internes.

La totalité de cette zone fermée 20 est soumise à un système de gradients de pression qui respectera un principe de cascade entre les locaux constitutifs, en augmentant la dépression en fonction du degré de protection requis et nécessaire, c'est-à-dire du niveau quantitatif de génération ou de la teneur en nanoparticules.

Toutes les pressions sont exprimées par rapport à une pression de référence prise en dehors de la zone fermée. L'unité utilisée est le pascal (Pa, figure 3). Les valeurs de pression mentionnées sont purement indicatives et toutes autres valeurs appropriées tombent dans le champ de la présente invention.

Le sas d'entrée de la zone fermée 20 est constitué d'un premier local d'isolation en surpression 21 (0 à +15 Pa) et d'un second local en dépression 22 (0 à -20 Pa), lequel constitue un puits et dès lors une barrière tant à l'entrée de particules externes contaminantes qu'à la sortie de nanoparticules éventuellement présentes à cet endroit. Les opérateurs qui empruntent ce système d'entrée prennent dans le premier local 21 un survêtement ou une combinaison propre et le revêtent dans le second local 22. Inversement, en quittant la zone fermée 20, ils abandonnent le survêtement « potentiellement contaminé » dans un récipient fermé, dans le second local 22, et repassent ensuite par le premier local 21 pour sortir de l'installation. L'accès à la zone fermée est restreint à des personnes autorisées par une technique appropriée (reconnaissance d'empreintes digitales, de pupille oculaire, etc.).

Le local principal 23 (-20 Pa) peut contenir l'unité fermée non étanche de distribution des gaz 24 maintenue également à -20 Pa ainsi que les unités fermées 25 de production de plasma de nanoparticules, maintenues elles-mêmes à -30 Pa.

Les unités fermées de production de plasma 30 sont alimentées en poudres, liquides et/ou gaz. L'alimentation en poudres provenant éventuellement de mélangeurs se fait par système automatique étanche qui fait appel à un système de manchon ou à un système de porte à transfert rapide à usage multiple tel que le système α/β (non représenté). Le système de porte α/β (La Calhène, France), qui procède d'un concept d'abord développé pour l'industrie nucléaire et ensuite agréé dans l'industrie pharmaceutique, est un système de transfert à double-porte utilisé pour le passage d'un milieu confiné à un autre, dans des conditions stériles et étanches, sans possibilité de rupture accidentelle du confinement.

De même, dans les unités de production 25, la collecte des poudres nanométriques se fera en récipient souple où rigide via des portes α/β garantissant ainsi une protection optimale des personnes et une contamination en principe nulle de l'environnement.

Grâce à un sas de transfert à double accès, à chaque zone fermée de production 25 est liée une zone de laverie et décontamination 26, maintenue à -25 Pa. Les outils amovibles appartenant à l'unité de production sont, après chaque campagne, démontés et emballés hermétiquement dans des sacs en plastique ou, selon les possibilités, obturés hermétiquement par des systèmes temporaires de fermeture, tels que des bouchons, flasques ou éléments similaires. Les opérations de démontage du procédé sont réalisées avec une mise en dépression temporaire de l'équipement de production afin de maintenir confinés les contaminants, le temps de l'isolement. Ainsi préparés et sécurisés, les outils amovibles sont placés dans le sas de transfert par la porte de production 35 et repris par la porte de laverie 36 dans la zone de lavage 26.

Des locaux techniques adjacents et séparés 27, destinés au traitement des gaz potentiellement contaminés, seront installés isolément par rapport à la zone fermée principale, bien que maintenus à des pressions de -20 à -50 Pa, selon les nécessités, de façon à confiner toute contamination potentielle de l'environnement.

Enfin, un laboratoire destiné aux activités de contrôle de qualité est installé séparément de la zone fermée 20 et placé à une dépression de confinement de -5 Pa à -10 Pa (non représenté). Le laboratoire est équipé d'un système de collecte des poudres résiduelles éventuellement en suspension dans l'air par différents moyens de protection tels que des hottes d'aspiration, des tables aspirantes ou éléments similaires, destinés à la manipulation des échantillons pour analyse. Les échantillons de production auront été collectés aux différentes étapes de production en utilisant comme pour l'emballage et la manutention des poudres produites les systèmes de portes α/β.

### Principe d'intégrité et de non-dispersion des nanopoudres dans la nature

Qu'ils soient d'ordre gazeux, liquide ou solide, les rejets sont gérés de manière à garantir qu'aucune nanoparticule ne sorte de manière non maîtrisée du local fermé et de ses équipements.

En détail :
- la ventilation des locaux est assurée par un groupe de pulsion/extraction où l'air transite par des filtres absolus ou filtres HEPA avant rejet. Un filtre HEPA (*High Efficiency Particulate Air*) a la capacité de retenir des particules dans l'air d'un diamètre de 0,3 microns avec un taux d'efficacité de 99,97% ;
- les gaz du procédé chargés en nanoparticules sont lavés avant d'être rejetés à l'extérieur ;
- tous les liquides (procédé, lavage) sont collectés dans une ou plusieurs cuves de décantation et sont traités ;
- les vêtements et objets pollués sont évacués dans des sacs hermétiques pour subir un traitement spécifique.

### Lexique

Nanoparticule : particule dont la taille caractéristique varie typiquement de 20 à 100 nanomètres, voire 200 nanomètres en fonction des applications (oxydes, nitrures, carbures, métaux, etc.).
Plasma inductif : plasma généré grâce une bobine d'induction alimentée par une source de courant alternatif à haute fréquence.
Gaz porteur : gaz utilisé pour transporter les poudres (matières premières) depuis le système d'alimentation vers la torche plasma.
Gaz central : gaz servant à stabiliser le plasma.
Gaz de gainage : gaz utilisé pour créer une couche protectrice et réduire le flux de chaleur entre le plasma et les parois de la torche.
Gaz de trempe : gaz servant à refroidir très rapidement le jet du plasma contenant les vapeurs de métaux, oxydes, nitrures, carbures, alliages, etc. où la nucléation homogène donne lieu à la formation d'un aérosol très fin.

## Revendications

1. Installation intégrée pour la production et le traitement de nanoparticules, de préférence sous la forme de nanopoudres ou de nanotubes, dans des conditions de risque maîtrisé pour des opérateurs et pour l'environnement, comprenant des moyens fermés de fabrication, de filtration et de collecte desdites nanoparticules, dans une zone confinée (20), en dépression au moins partielle par rapport à son environnement extérieur (100) qui se trouve à une pression dite de référence, comprenant une pluralité de locaux confinés (22, 23, 24, 25, 26, 27) respectivement soumis à une série de dépressions en cascade par rapport à la pression de référence, en fonction du degré de protection nécessaire pour les opérateurs et l'environnement, **caractérisée en ce que** la zone confinée (20) comprend au moins :
- un local principal (23) maintenu à une pression égale à la pression de référence moins une valeur comprise entre 10 et 50 Pa, ledit local principal (23) comprenant au moins une unité fermée et étanche de production (25) maintenue à la pression du local principal (23) moins 10 Pa ou plus ;
- une unité fermée non étanche de distribution de gaz (24) maintenue à la pression du local principal (23) ;
- une zone de laverie et de décontamination (26) maintenue à la pression du local principal (23) moins 5 Pa ou plus ;
- un local technique isolé de traitement des gaz (27) maintenu à la pression du local principal (23) moins 10 Pa ou plus ;
- un sas d'entrée (21, 22) des opérateurs à la zone confinée (20) à partir de l'extérieur, comprenant successivement un premier local d'isolation (21) en surpression à une valeur comprise entre 0 et +15 Pa au-dessus de la pression de référence et un second local dit local-barrière (22), en dépression à une valeur comprise entre 0 et -20 Pa par rapport à la pression de référence.

2. Installation selon la revendication 1, **caractérisée en ce que** le local principal (23) est maintenu à la pression de référence moins 20 Pa.

3. Installation selon la revendication 1, **caractérisée en ce que** la zone de laverie et de décontamination (26) est accessible uniquement à partir du local principal (23), au moyen d'un sas.

4. Installation selon la revendication 1, **caractérisée en ce que** le local de traitement des gaz (27) est inaccessible à partir de la zone confinée (20).

5. Installation selon l'une quelconque des revendications précédentes, **caractérisée en ce qu'**elle comporte des moyens pour limiter l'accès de la zone confinée (20) à une ou plusieurs personnes autorisées.

6. Installation selon l'une quelconque des revendications précédentes, **caractérisée en ce que** les nanoparticules sont produites par procédé plasma à couplage inductif.

7. Installation selon la revendication 6, **caractérisée en ce qu'**elle comprend :
- des moyens d'alimentation en réactifs et matières premières sous forme solide (2A), de préférence de poudre micrométrique, liquide ou gazeuse (2B, 2C) ;
- une torche plasma (3) alimentée par un générateur électrique à haute fréquence et respectivement en gaz porteur (4A), de préférence l'argon, l'hydrogène ou un mélange de ceux-ci, en gaz central (4B), de préférence l'argon, l'hélium ou un mélange de ceux-ci et en gaz de gainage ou de confinement (4C), de préférence l'argon, l'hydrogène, l'azote, l'hélium ou un mélange de deux ou plusieurs de ces gaz ;
- un réacteur (5) comprenant une chambre à vide pour la synthèse de nanoparticules par condensation/solidification, grâce à l'injection d'un gaz de trempe (4D) et en option d'un gaz de fonctionnalisation ;
- un cyclone (6) de séparation permettant une première séparation des poudres en fonction de leur taille ;
- une unité de filtration (7) par cartouche de tamis métallique ou membrane synthétique avec contre-flux de gaz « blowback » (8) émis de façon continue ou intermittente ;
- une unité de pompage à vide et recyclage du gaz de trempe (9), optionnelle en fonction du degré de corrosivité des gaz ;
- un échappement (10) des gaz éventuellement recyclés vers l'atmosphère ;
- une unité (11) de collecte et d'emballage par système de double-porte de type α/β ou en boîte à gants sous forme sèche ou en suspension.

8. Installation selon la revendication 7, **caractérisée en ce qu'**elle comprend des moyens d'alimentation en poudre (2A) automatiques et étanches, ladite poudre provenant éventuellement de mélangeurs, lesdits moyens faisant appel à des manchons ou à des systèmes de double-porte α/β à usage multiple.

9. Installation selon la revendication 7, **caractérisée en ce qu'**elle comprend des moyens de collecte en récipient souple ou rigide via des double-portes α/β.

10. Installation selon l'une quelconque des revendications précédentes, **caractérisée en ce qu'**elle comprend, de manière séparée à la zone confinée (20), un laboratoire pour le contrôle de qualité maintenu en dépression à une valeur de - 5 Pa à - 10 Pa en dessous de la pression de l'environnement (100) et équipé, en vue de la manipulation d'échantillons de production pour analyse, de moyens protecteurs de collecte des poudres résiduelles éventuellement en suspension dans l'air, tels que hottes d'aspiration ou tables aspirantes, et de moyens pour la collecte desdits échantillons aux différentes étapes de production précitées à systèmes de portes α/β, comme utilisé pour l'emballage et la manutention des poudres produites.

11. Installation selon l'une quelconque des revendications précédentes, **caractérisée en ce qu'**elle comprend :
- des moyens de ventilation des locaux confinés sous forme d'un groupe de pulsion/extraction dans lequel l'air transite au travers de filtres absolus ou HEPA avant rejet vers l'environnement ;
- des moyens de lavage des gaz chargés en nanoparticules avant leur rejet vers l'environnement ;
- une ou plusieurs cuves de décantation pour la collecte des liquides utilisés et des moyens de traitement de ceux-ci.

12. Procédé de production et de traitement de nanoparticules, de préférence sous la forme de nanopoudres ou nanotubes, dans des conditions de risque maîtrisé pour des opérateurs et pour l'environnement, utilisant une installation comprenant toutes les caractéristiques des revendications 1 à 11, **caractérisé en ce qu'**il comporte au moins les mesures de protection suivantes des opérateurs et/ou de l'environnement :
- l'accès d'un opérateur à la zone confinée (20) est assuré, sur base de moyens d'autorisation, en passant par le sas d'entrée comprenant le premier local d'isolation (21) en surpression par rapport à l'environnement extérieur (100), où l'opérateur prend un survêtement propre et le second local dit local-barrière (22), en dépression par rapport à l'environnement extérieur (100) et éventuellement par rapport au local principal (23) de la zone confinée (20), où l'opérateur revêt ce survêtement ;
- l'alimentation en poudre comme matière première de l'unité fermée de production (25) en dépression par rapport au local principal (23) de la zone confinée (20) est effectuée par un système automatique étanche utilisant un manchon ou système de double-porte α/β à usage multiple ;
- avant emballage et manutention, la collecte des nanoparticules produites dans l'unité de production (25) est effectuée au moyen de récipients souples ou rigides via un ou plusieurs systèmes de double-porte α/β ;
- les nanoparticules produites sont transférées de l'unité fermée de production (25) à la zone de laverie et décontamination (26) en dépression par rapport au local principal (23), par un sas de transfert à double accès qui peut être le local principal (23) ;
- des outils amovibles appartenant à l'unité de production (25) sont, après chaque campagne, démontés et emballés hermétiquement dans des sacs en plastique ou, le cas échéant, obturés hermétiquement par des dispositifs temporaires de fermeture tels que bouchons ou flasques, l'équipement de production étant mis temporairement en dépression pendant le démontage, afin de maintenir confinés les contaminants ;
- les outils amovibles préparés et sécurisés comme indiqué ci-dessus sont transférés de l'unité de production (25) à la zone de laverie et décontamination (26) par le sas de transfert ;
- des gaz utilisés dans le procédé de production sont traités dans les locaux techniques adjacents (27), isolés et maintenus en dépression par rapport à l'environnement (100) et au local principal (23) de la zone de confinement ;
- des activités de contrôle de qualité sont effectuées dans un laboratoire séparé, en dépression par rapport à l'environnement (100) et équipé de moyens de protection pour la collecte des nanoparticules en suspension dans l'air et de moyens pour la collecte des échantillons prélevés aux différentes étapes de production comme décrit ci-dessus ;
- les locaux confinés sont ventilés par un groupe de pulsion/extraction où l'air transite par des filtres absolus avant rejet à l'atmosphère ;
- les gaz du procédé de production chargés en nanoparticules sont lavés avant rejet à l'atmosphère ;
- les liquides du procédé de production et de lavage sont collectés dans une ou plusieurs cuves de décantation et sont traités.

## Claims

1. An integrated installation for producing and treating nanoparticles, preferably in the form of nanopowders or nanotubes, under controlled operator and environmental risk conditions, comprising closed means for manufacturing, filtering and collecting said nanoparticles, in a confined zone (20) at least partially under depression relative to the outside environment (100) that is at a so-called reference pressure, comprising a plurality of confined areas (22, 23, 24, 25, 26, 27) respectively subjected to a cascaded series of depressions relative to the reference pressure, depending on the required level of protection for operators and the environment, **characterized in that** the confined zone (20) comprises at least:
- a main area (23) kept at a pressure equal to the reference pressure minus a value comprised between 10 and 50 Pa, said main area (23) comprising at least one closed and sealed production unit (25) kept at the pressure of the main area (23) minus 10 Pa or more;
- an unsealed closed gas distribution unit (24) kept at the pressure of the main area (23);
- a washing and decontamination unit (26) kept at the pressure of the main area (23) minus 5 Pa or more;
- an isolated gas treatment technical area (27) kept at the pressure of the main area (23) minus 10 Pa or more;
- an airlock (21, 22) for the operators to enter the confined zone (20) from the outside, successively comprising a first isolation area (21) under overpressure at a value comprised between 0 and +15 Pa above the reference pressure and a second area called a barrier area (22), under depression at a value comprised between 0 and -20 Pa relative to the reference pressure.

2. The installation according to claim 1, **characterized in that** the main area (23) is kept at the reference pressure minus 20 Pa.

3. The installation according to claim 1, **characterized in that** the washing and decontamination zone (26) is accessible only from the main area (23), by means of an airlock.

4. The installation according to claim 1, **characterized in that** the gas treatment area (27) is inaccessible from the confined zone (20).

5. The installation according to any of the preceding claims, **characterized in that** it has means for limiting access to the confined zone (20) to one or more authorized people.

6. The installation according to any of the preceding claims, **characterized in that** the nanoparticles are produced by an inductive coupling plasma method.

7. The installation according to claim 6, **characterized in that** it comprises:
- supply means of reagents and raw materials in a solid form (2A), preferably micrometric, liquid or gaseous powder (2B, 2C);
- a plasma torch (3) supplied by a high-frequency electric generator and respectively with a carrier gas (4A), preferably argon, hydrogen or a mixture thereof, with a central gas (4B), preferably argon, helium or a mixture thereof, and with a sheath or confining gas (4C), preferably argon, hydrogen, nitrogen, helium or a mixture of two or more of those gases;
- a reactor (5) comprising a vacuum chamber for synthesizing nanoparticles by condensation/solidification, due to the injection of a quenched gas (4D) and optionally of a functionalizing gas;
- a separating cyclone (6) allowing a first separation of the powders according to their size;
- a filtration unit (7) by metallic screen cartridge or synthetic membrane with a "blowback" gas counter-flow (8) emitted continuously or intermittently;
- a unit for vacuum pumping and recycling the quenched gas (9), optional depending on the level of corrosivity of the gases;
- an exhaust (10) of the possibly recycled gases towards the atmosphere;
- a collection and packaging unit (11) with a double-door system of the α/β type or in a glove box in dry form or in suspension.

8. The installation according to claim 7, **characterized in that** it comprises automatic and sealed powder supply means (2A), said powder possibly coming from mixers, said means using sleeves or multiple-use α/β double-door systems.

9. The installation according to claim 7, **characterized in that** it comprises collection means in a flexible or rigid container via α/β double doors.

10. The installation according to any of the preceding claims, **characterized in that** it comprises, separately from the confined zone (20), a quality control laboratory kept under depression at a value from -5 Pa to -10 Pa below the pressure of the environment (100) and equipped, with a view to handling production samples for analysis, with protective collection means of the residual powders possibly suspended in the air, such as ventilation hoods or ventilating tables, and with means for collecting said samples at the different aforementioned production steps with α/β door systems, as used for the packaging and handling of the produced powders.

11. The installation according to any of the preceding claims, **characterized in that** it comprises:
- ventilation means of the confined areas in the form of a drive/extraction group in which the air passes through absolute or HEPA filters before being rejected into the environment;
- means for washing the gases charged with nanoparticles before they are rejected into the environment;
- one or more decantation tanks for collecting used liquids and means for treating them.

12. A method for producing and treating nanoparticles, preferably in the form of nanopowders or nanotubes, under controlled operator and environmental risk conditions, using an installation comprising all the features of claims 1 to 11, **characterized in that** it comprises at least the following protective measures for operators and/or the environment:
- the access of an operator to the confined zone (20) is allowed, based on authorization means, by going through the entry airlock comprising the first isolation area (21) under overpressure relative to the outside environment (100), where the operator gets a clean suit and a second area called barrier area (22), under depression relative to the outside environment (100) and possibly relative to the main area (23) of the confined zone (20), where the operator puts on the suit;
- the supply with powder as raw material of the closed production unit (25) under depression relative to the main area (23) of the confined zone (20) is carried out by a sealed automatic system using a sleeve or multiple-use α/β double-door system;
- before packaging and handling, the collection of the nanoparticles produced in the production unit (25) is carried out by means of flexible or rigid containers via one or more α/β double-door systems;
- the produced nanoparticles are transferred from the closed production unit (25) to the washing and decontamination zone (26) under depression relative to the main area (23), via a double-access transfer airlock that may be the main area (23);
- after each production run, detachable tools belonging to the production unit (25) are disassembled and hermetically wrapped in plastic bags or, if applicable, hermetically sealed by temporary closing devices such as caps or flanges, the production equipment being temporarily placed under depression during the disassembly, so as to keep the contaminants confined;
- the detachable tools, prepared and secured as indicated above, are transferred from the production unit (25) to the washing and decontamination zone (26) via the transfer airlock;
- gases used in the production method are treated in the adjacent technical areas (27), isolated and kept under depression relative to the environment (100) and the main area (23) of the confinement zone;
- quality control operations are performed in a separate laboratory, under depression relative to the environment (100) and equipped with protection means for collecting nanoparticles suspended in the air and with means for collecting samples taken during the different production steps as described above;
- the confined areas are ventilated by a drive/extraction group where the air passes through absolute filters before being rejected into the atmosphere;
- the gases from the production method charged with nanoparticles are washed before being rejected into the atmosphere;
- the production method and washing liquids are collected in one or more decantation tanks and treated.

## Patentansprüche

1. Integrierte Anlage für die Produktion und die Verarbeitung von Nanopartikeln, vorzugsweise in Form von Nanopulvern oder Nanoröhrchen, unter für die Bediener und die Umwelt kontrollierten Risikobedingungen, die geschlossene Mittel für die Herstellung, die Filtration und das Sammeln der Nanopartikel aufweist, in einer abgeschlossenen Zone (20), unter mindestens teilweisem Unterdruck im Verhältnis zu ihrer äußeren Umwelt (100), die einen sogenannten Referenzdruck aufweist, die eine Vielzahl von abgeschlossenen Räumen (22, 23, 24, 25, 26, 27) umfasst, die in Abhängigkeit vom für die Bediener und die Umwelt notwendigen Schutzgrad jeweils einer im Verhältnis zum Referenzdruck abfallenden Reihe von Unterdrücken ausgesetzt sind, **dadurch gekennzeichnet, dass** die abgeschlossene Zone (20) mindestens umfasst:
- einen Hauptraum (23), der auf einem Druck gehalten wird, der dem Referenzdruck entspricht, minus eines Werts zwischen 10 und 50 Pa inklusive, wobei der Hauptraum (23) mindestens eine geschlossene und dichte Produktionseinheit (25) umfasst, die auf dem Druck des Hauptraums (23) minus 10 Pa oder mehr gehalten wird,
- eine geschlossene nicht dichte Gasverteilungseinheit (24), die auf dem Druck des Hauptraums (23) gehalten wird,
- eine Reinigungs- und Dekontaminierungszone (26), die auf dem Druck des Hauptraums (23) minus 5 Pa oder mehr gehalten wird,
- einen isolierten technischen Gasverarbeitungsraum (27), der auf dem Druck des Hauptraums (23) minus 10 Pa oder mehr gehalten wird,
- eine Eingangsschleuse (21, 22) für die Bediener in die abgeschlossene Zone (20) von außen, die aufeinanderfolgend einen ersten Isolationsraum (21) mit Überdruck eines Werts zwischen 0 und +15 Pa inklusive über dem Referenzdruck und einen zweiten Barriereraum (22) mit Unterdruck eines Werts zwischen 0 und -20 Pa im Verhältnis zum Referenzdruck umfasst.

2. Anlage nach Anspruch 1, **dadurch gekennzeichnet, dass** der Hauptraum (23) auf dem Referenzdruck minus 20 Pa gehalten wird.

3. Anlage nach Anspruch 1, **dadurch gekennzeichnet, dass** die Reinigungs- und Dekontaminierungszone (26) nur vom Hauptraum (23) aus mittels einer Schleuse erreichbar ist.

4. Anlage nach Anspruch 1, **dadurch gekennzeichnet, dass** der Gasverarbeitungsraum (27) von der abgeschlossenen Zone (20) aus unerreichbar ist.

5. Anlage nach einem der vorangehenden Ansprüche, **dadurch gekennzeichnet, dass** sie Mittel umfasst, um den Zugang zu der abgeschlossenen Zone (20) auf eine oder mehrere bevollmächtigte Personen zu beschränken.

6. Anlage nach einem der vorangehenden Ansprüche, **dadurch gekennzeichnet, dass** die Nanopartikel durch Plasmaverfahren mit induktiver Kopplung hergestellt werden.

7. Anlage nach Anspruch 6, **dadurch gekennzeichnet, dass** sie umfasst:
- Mittel zur Versorgung mit Reagenzien und Rohstoffen in fester (2A), vorzugsweise Mikrometerpulver-, flüssiger oder gasförmiger (2B, 2C) Form,
- einen Plasmabrenner (3), der von einem elektrischen Hochfrequenzerzeuger und jeweils mit Trägergas (4A), vorzugsweise Argon, Wasserstoff oder einem Gemisch derselben, mit Zentralgas (4B), vorzugsweise mit Argon, Helium oder einem Gemisch derselben, und mit einem Hüll- oder Sicherheitsgas (4C), vorzugsweise Argon, Wasserstoff, Stickstoff, Helium oder einem Gemisch von zwei oder mehreren dieser Gase versorgt wird,
- einen Reaktor (5), der eine Vakuumkammer für die Synthese von Nanopartikeln durch Kondensation/Erstarrung dank der Injektion eines Härtgases (4D) und optional eines Funktionsgases umfasst,
- einen Absetzzyklon (6), der eine erste Pulverabscheidung in Abhängigkeit von deren Größe erlaubt,
- eine Filtrationseinheit (7) mit Metallsiebkartusche oder synthetischer Membran mit kontinuierlichem oder diskontinuierlichem "Blowback"-Gasgegenfluss (8),
- eine in Abhängigkeit vom Korrosionsgrad der Gase optionale Vakuumpump- und Härtgasrecyclingeinheit (9),
- einen Auslass (10) der eventuell recycelten Gase in die Atmosphäre,
- eine Sammler- und Verpackungseinheit (11) durch Doppeltürsystem vom Typ α/β oder Handschuhfach in trockener Form oder als Suspension.

8. Anlage nach Anspruch 7, **dadurch gekennzeichnet, dass** sie automatische und dichte Pulverversorgungsmittel (2A) umfasst, wobei das Pulver eventuell von Mischern geliefert wird, wobei die Mittel Muffen oder α/β-Mehrweg-Doppeltürsysteme verwenden.

9. Anlage nach Anspruch 7, **dadurch gekennzeichnet, dass** sie Sammelmittel in elastischem oder starrem Behälter über α/β-Doppeltüren umfasst.

10. Anlage nach einem der vorangehenden Ansprüche, **dadurch gekennzeichnet, dass** sie separat zum abgeschlossenen Bereich (20) ein Labor zur Überwachung der Qualität umfasst, das in Unterdruck auf einem Wert von -5 Pa bis -10 Pa unter dem Druck der Umwelt (100) gehalten wird und im Hinblick auf den Umgang mit zu analysierenden Produktionsproben mit Schutzmitteln zum Sammeln von eventuell in der Luft schwebenden Restpulvern ausgestattet ist, wie beispielsweise Abzugshauben oder - tischen, und mit Mitteln zur Entnahme dieser Proben während der verschiedenen vorgenannten Schritte der Produktion mit α/β-Türen, wie für die Verpackung und den Umschlag der produzierten Pulver verwendet.

11. Anlage nach einem der vorangehenden Ansprüche, **dadurch gekennzeichnet, dass** sie umfasst:
- Lüftungsmittel der abgeschlossenen Räume in Form einer Pulsions-/Extraktionsgruppe, in der die Luft vor der Abgabe in die Umwelt verschiedene absolute oder HEPA-Filter passiert,
- Reinigungsmittel der mit Nanopartikeln belasteten Gase vor deren Abgabe in die Umwelt,
- einen oder mehrere Absetztanks zum Sammeln der verwendeten Flüssigkeiten oder Verarbeitungsmittel derselben.

12. Verfahren für die Produktion und die Verarbeitung von Nanopartikeln, vorzugsweise in Form von Nanopulvern oder Nanoröhrchen, unter für die Bediener und die Umwelt kontollierten Risikobedingungen, das eine Anlage verwendet, die alle Merkmale der Ansprüche 1 bis 11 umfasst, **dadurch gekennzeichnet, dass** es mindestens die folgenden Schutzmaßnahmen für die Bediener und/oder die Umwelt aufweist:
- der Zugang eines Bedieners in die abgeschlossene Zone (20) ist auf der Basis von Genehmigungsmitteln durch Passieren der Eingangsschleuse gesichert, die den ersten Isolationsraum (21) mit Überdruck im Verhältnis zur äußeren Umwelt (100), wo der Bediener eine saubere Überbekleidung nimmt, und den zweiten Barriereraum (22) mit Unterdruck im Verhältnis zur äußeren Umwelt (100) und eventuell im Verhältnis zum Hauptraum (23) der abgeschlossenen Zone (20), wo der Bediener diese Überbekleidung anzieht, umfasst,
- die Versorgung mit Pulver als Rohstoff der geschlossenen Produktionseinheit (25) mit Unterdruck im Verhältnis zum Hauptraum (23) der abgeschlossenen Zone (20) wird von einem dichten automatischen System durchgeführt, das eine Muffe oder ein α/β-Mehrweg-Doppeltürsystem verwendet,
- vor dem Verpacken und dem Umschlag wird das Sammeln der in der Produktionseinheit (25) hergestellten Nanopartikel mit Hilfe von elastischen oder starren Behältern über ein oder mehrere α/β-Doppeltürsystem(e) durchgeführt,
- die hergestellten Nanopartikel werden von der geschlossenen Produktionseinheit (25) zur Reinigungs- und Dekontaminierungszone (26) mit Unterdruck im Verhältnis zum Hauptraum (23) durch eine Transferschleuse mit doppeltem Zugang transferiert, die der Hauptraum (23) sein kann,
- demontierbare Werkzeuge, die zur Produktionseinheit (25) gehören, werden nach jeder Kampagne demontiert und hermetisch in Kunststoffbeuteln verpackt oder gegebenenfalls hermetisch von zeitweiligen Verschlussvorrichtungen verschlossen, wie Stopfen oder Flanschen, wobei die Produktionsausrüstung während der Demontage zeitweilig in Unterdruck versetzt wird, um die kontaminierenden Stoffe abgeschlossen zu halten,
- die demontierbaren Werkzeuge, die wie oben beschrieben vorbereitet und gesichert wurden, werden von der Produktionseinheit (25) durch die Transferschleuse zur Reinigungs- und Dekontaminierungszone (26) transferiert,
- die im Produktionsverfahren verwendeten Gase werden in den benachbarten Technikräumen (27) behandelt, die isoliert und im Verhältnis zur Umwelt (100) und zum Hauptraum (23) der abgeschlossenen Zone in Unterdruck gehalten werden,
- Tätigkeiten zur Qualitätskontrolle werden in einem separaten Labor durchgeführt, in dem im Verhältnis zur Umwelt (100) Unterdruck herrscht und das mit Schutzmitteln zum Sammeln von in der Luft schwebenden Nanopartikeln und mit Mitteln zum Sammeln der während der verschiedenen Schritte der Produktion entnommenen Proben ausgestattet ist, wie oben beschrieben,
- die abgeschlossenen Räume werden von einer Pulsions-/Extraktionsgruppe belüftet, wobei die Luft vor der Abgabe in die Atmosphäre durch absolute Filter strömt,
- die mit Nanopartikeln belasteten Gase des Produktionsverfahrens werden vor der Abgabe in die Atmosphäre gereinigt,
- die Flüssigkeiten des Produktions- und Reinigungsverfahrens werden in einem oder mehreren Absetztank(s) gesammelt und behandelt.
